Europäisches Patentamt

European Patent Office

Office européen des brevets

(11) Publication number: **0 456 880 A2**

## EUROPEAN PATENT APPLICATION

(21) Application number: **90116540.7**

(22) Date of filing: **29.08.90**

(51) Int. Cl.⁵: **B23K 11/11**

(30) Priority: **16.05.90 JP 51140/90 U**

(43) Date of publication of application:
**21.11.91 Bulletin 91/47**

(84) Designated Contracting States:
**DE FR GB IT**

(71) Applicant: **Hirane, Akio**
**11626, Midorigaoka**
**Meguro-ku, Tokyo(JP)**

(72) Inventor: **Hirane, Akio**
**11626, Midorigaoka**
**Meguro-ku, Tokyo(JP)**

(74) Representative: **Einsel, Martin et al**
**Dr.R. Döring, Dr.J. Fricke, M.Einsel**
**Jasperallee 1a**
**W-3300 Braunschweig(DE)**

(54) **Spot welder.**

㊻ A spot welder comprises a welding transformer for obtaining a low voltage and a large current. A welding tip side cable and an earth side cable are connected to secondary terminals, respectively, of said welding transformer. At least two or more of said earth side cables are provided.

EP 0 456 880 A2

This innovation relates to a spot welder comprising a welding transformer for obtaining a low voltage and a large current, and a welding tip side cable and an earth side cable connected to secondary terminals, respectively, of said welding transformer.

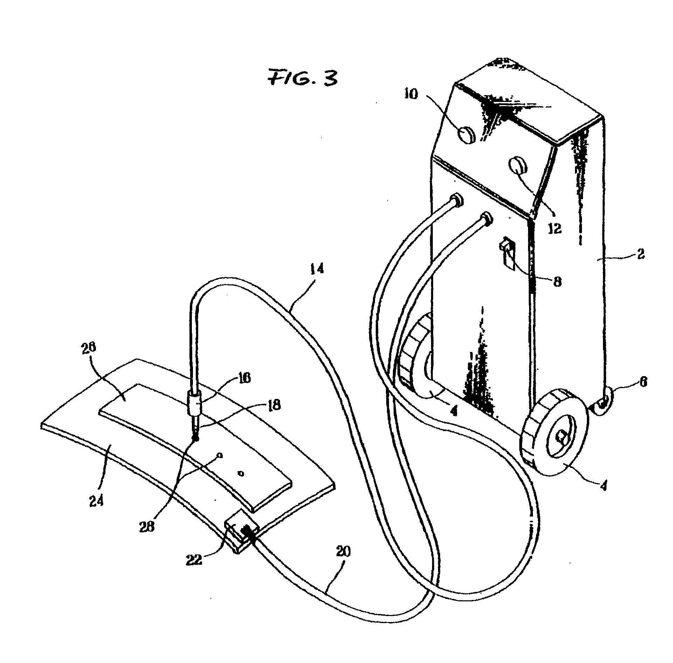

Spot welders are well known in the state of the art. Fig. 3 is an explanatory view of a conventional spot welder.

In Fig.3, reference numeral 2 designates a rectangular shaped welder body, which is provided at its lower portions with pairs of left and right large and small tires 4 and 6 so that the welder body may be moved according to the work conditions.

Externally of the welder body 2 are provided a main switch 8 for turning ON and OFF of a power source for the whole welder ad adjusting knobs 10 and 12 for adjusting welding current values and the like.

The welder body 2 ist interiorly provided with a welding transformer (not shown) for obtaining a low voltage and a large current, and a secondary side of the welding transformer is provided with a plus terminal (not shown) and a minus terminal (not shown).

A distal end of the welding tip side cable 14 is connected to the plus terminal on the secondary side of the welding transformer, the welding tip side cable being drawn outside from the front side of the welding body 2.

A tip holder 16 is mounted on the extreme end of the welding tip side cable 14, and a welding tip 18 is mounted on the extreme end of the tip holder 16.

A distal end of the earth side cable 20 is connected to the minus terminal on the secondary side of the welding transformer, the earth side cable 20 being drawn outside from the front side of the welder body 2.

A flat earth plate 22 ist mounted on the extreme end of the earth side cable 20 drawn outside from the front side of th welder body 2.

In carrying out the one-side spot welding by the spot welder, the earth plate 22 at the extreme end of the earth side cable 20 is placed in close contact with an article to be welded 24 on the lower side by means of a vice or C-clamp (not shown) and they are electrically connected. The main switch 8 is turned ON, and the extreme end of the welding tip 18 on the output side is pressed against a predetermined portion of an article to be welded 2 on the upper side.

Thereby, a large current concentrically flows into predetermined portions of the articles to be welded 24 and 26 (the portion on which the welding tip 18 is pressed) to apply the one-side spot welding to the articles to be welded 24 and 26.

However, the conventional spot welder as described has a problem in that when a portion against which the welding tip 18 is pressed is away from a part with which the earth plate 22 is placed in close contact, the voltage drop increases and the current flowing into the portion against which the welding tip 18 is pressed decreases, sometimes resulting in an incomplete welding.

Therefore, heretofore, in case of welding such a part as described above, welding time is extended. In this case, there occur problems in that when the welding time is extended, the working efficiency is lowered and a large amount of heat is generated in the periphery of the part to be welded to produce an annealed portion in the vicinity thereof, and as a result the strength of the articles to be welded 24 und 26 is lowered and in addition, the articles to be welded 24 and 26 become deformed.

This innovation has been accomplished in order to solve the aforementioned problems. An object of the innovation is to provide a spot welder which can apply a good one-side spot welding in a short period of time without producing annealing or deformation in the vicinity of a part to be welded.

For achieving the aforesaid objekt, the spot welder according to this innovation comprises a welding transformer for obtaining a low voltage an a large current, and a welding tip side cable and an earth side cable connected to secondary terminals, respectively, of said welding transformer, wherein at least two or more of said earth side cables are provided.

In the spot welder according to this innovation, at least two or more earth side cables are provided. Therefore, if these earth side cables are connected to an article to be welded so that said article to be welded is present therebetween, the voltage drop between the earth side cables and a part to be welded of the article to be welded decreases and the difference of electric resistance caused by the difference in the part to be almost disappears.

The present innovation has the advantages that since at least two or more earth side cables are provided, even if the part to be welded is changed, variation of the electric resistance between the earth side cable and the part to be welded of the article to be welded can be minimized; the welding time need not be extended; the article to be welded is not denatured or deformed due to generation of heat; and accordingly, good welding can be applied.

Furthermore, according to this innovation, there is the further effect that since the diameter of the earth side cable can be reduced, the earth side cable can be easily moved, and accordingly, operability of welding is improved.

An embodiment of this innovation will be described hereinafter in detail with reference to the accompanying drawings.

Fig.1 is an explanatory view of a spot welder according to one embodiment of this innovation;

Fig.2 is an explanatory view showing the earth side cable according to another embodiment of this innovation and

Fig.3 is an explanatory view of a conventional spot welder.

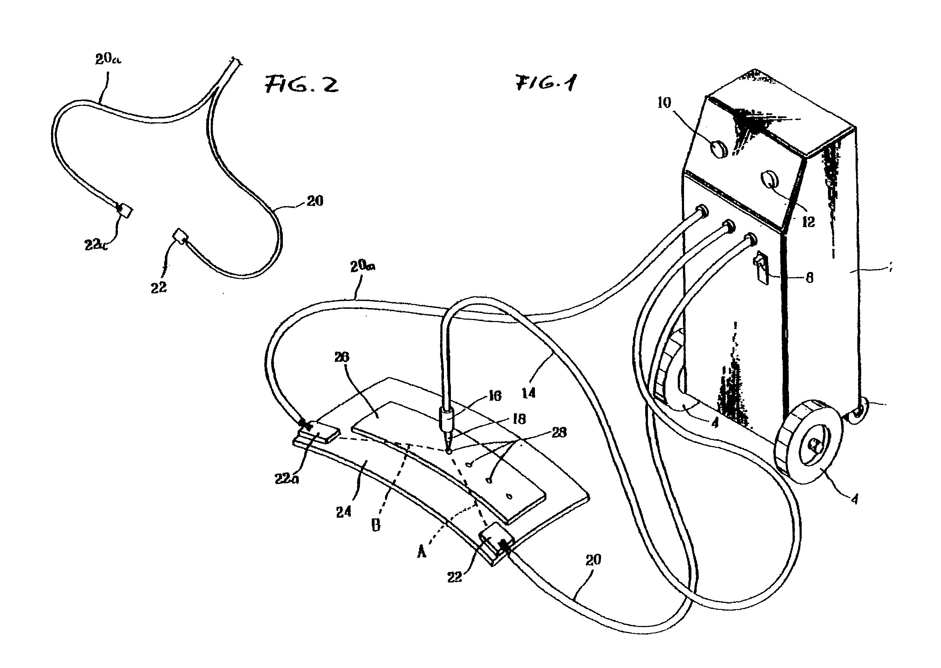

In Fig.1, reference numeral 2 designates a rectangular shaped welder body, which is provided at its lower portions with pairs of left and right large and small tires 4 and 6 so that the welder body may be moved according to the work conditions.

Externally of the welding body 2 are provided a main switch 8 for turning ON and OFF a power source for the whole welder and adjusting knobs 10 and 12 for adjusting welding current values and the like.

The welder body 2 is interiorly provided with a welding transformer (not shown) for obtaining a low voltage and a large current, and a secondary side of the welding transformer is provided with a plus terminal (not shown) and a minus terminal (not shown).

A distal end of the welding tip side cable 14 is connected to the plus terminal on the secondary side of the welding transformer, the welding tip side cable 14 being drawn outside from the front side of the welding body 2.

A tip holder 16 is mounted on the extreme end of the welding tip side cable 14, and a welding tip 18 is mounted on the extreme end of the tip holder 16.

Distal ends of two earth side cables 20 and 20a are connected to the minus terminal (not shown) on the secondary side of the welding transformer, the earth side cables 20 and 20a being drawn outside from the front side of the welder body 2.

Flat earth plates 22 and 22a are mounted on the extreme ends of the earth side cables 20 and 20a, respectively, drawn outside from the front side of the welder body 2.

The procedure for welding by use of the spot welder constructed as described above will be described hereinafter.

First, an article to be welded 26 on the upper side is placed on a predetermined position of an article to be welded 24 on the lower side.

Next, two parts of the articles to be welded 24 on the lower side for the earthing are polished clean, and the earth plates 22 and 22 are firmly tightened by means of a vice (not shown).

At that time, the article to be welded 26 on the upper side is located in an intermediary position of each of the earth plates 22 and 22a.

Next, the main switch 8 of the welder body 2 is turned ON. A current value is set by adjusting knobs 10 and 12, and a timer is set (0.3 to 0.4 second). The extreme end of the welding tip 18 is pressed against a predetermined part 28 of the article to be welded 26.

A large current flows into the part 28 against which the welding tip 18 is pressed concentrically for a predetermined period of time to heat and weld the part 28 of the articles to be welded 24 and 26.

Since the current is branched to flow between the part 28 and each of the earth plates 22 and 22a as indicatet by the broken lines A and B, heat is less generated in the periphery of the part 28 to be welded, and no lowering of strength and deformation caused by denaturation of the article to be welded.

While in the above-described embodiment, two earth side cables 20 and 20a have been directly drawn out of the welder body 2, it is to be noted that as shown in Fig.2, one earth side cable 20 is drawn out of the welder body 2, and the cable may be branched into two or more in number halfway.

While in the above-described embodiment, the earth side cable has been set to minus while the welding tip side cable to plus, it is to be noted of course that similar effect may be obtained by setting them reversely to the former.

List of reference numerals

| 2 | Welder body |
|---|---|
| 4,6 | tire |
| 8 | main switch |
| 10,12 | adjusting knobs |
| 14 | welding tip side cable |
| 16 | tip holder |
| 18 | welding tip |
| 20,20a | earth side cable |
| 22,22a | earth plate |
| 24,26 | article to be welded |
| 28 | part to be welded |

**Claims**

A spot welder comprising a welding transformer for obtaining a low voltage and a large current, and a welding tip side cable (14) and an earth side cable (20) connected to secondary terminals, respectively, of said welding transformer, characterized in that at least two or more of said earth side cables (20,20a) are provided.

FIG. 2

FIG. 1

EP 0 456 880 A2

FIG. 3